# EUROPEAN PATENT APPLICATION

(11) **EP 4 086 422 A1**
(43) Date of publication of application: **09.11.2022**
(21) Application number: 22171129.4
(22) Date of filing: 02.05.2022
(51) Int. Cl.: E06B 9/264, E06B 9/322

(54) **TENSIONING MECHANISM FOR A BLIND OPERATOR**

(30) Priority: 03.05.2021 US 202163183218 P
(71) Applicant: Intigral, Inc., Walton Hills OH 44146 (US)
(72) Inventor: MISURA III, Michael, Twinsburg, Ohio, 44087 (US); LONARDO, Raymond, Twinsburg, Ohio, 44087 (US); THOMAS, Justin, Twinsburg, Ohio, 44087 (US)
(74) Representative: Müller-Boré & Partner Patentanwälte PartG mbB

(57) **Abstract**

A tensioning mechanism for a blind assembly is contemplated. The mechanism includes one or more constant force springs affixed to a frame member so as to hold a belt driver and gear assembly in sufficient tension to translate axial movements of an operator into rotational force sufficient to raise or lower the blind (i.e., sun-blocking elements).

## Description

### RELATED APPLICATIONS AND TECHNICAL FIELD

The present invention relates to sun-shading blinds, and more particularly to a constant force tensioning mechanism used in conjunction with an operator sealed within a channel or structure of a hollow blind.

### BACKGROUND

Hollow blinds are selectively adjustable sun-blocking structures sealed between panes of glass or similar materials. Their structure provides for good thermal insulation, light transmittance, and sun-shading properties, and it mainly consists of a set of sun-shading sheets and a belt driven system which are sealed between panes of glass and/or within rails or channels on the peripheral edges (top, bottom, and/or sides) of such structures. The sun-blocking features may be stored in a rolled or compressed fashion gathered at the top and/or bottom of the blind structure.

The drive system for such blinds includes both an upper belt gear and a lower belt gear. A belt extends between these two belt gears and is movable by a handle or "operator." In this manner, the upper belt gear connects to a driver that moves the sun-blocking elements up or down, although the belt must be in tension so as to synchronize movement of the belt, gear, and sun-blocking element.

The necessary tension is achieved by adjusting the length of the belt or the distance between the upper and lower belt gears. Because the operator is ideally sealed within the structure to maximize its insulating properties (either within the glass or in a side rail associated with the blind structure), it is very difficult to adjust the tension of the belt. If the tensioning force is too small, gear teeth may not engage, whereas over-tensioning makes it difficult to move the blind up or down.

United States Patent 10,346,600 discloses a belt tensioning device for hollow blinds in which a holder seat with a cooperating belt gear. The seat slides within a lumen formed in a side frame of the blind structure and is coupled via clips and V-shaped slots within the lumen. This arrangement allows the belt tensioning device to move along a single direction within the side frame of the hollow blind so that the distance between two belt gears can be gradually adjusted, thereby maintaining a proper tensioning force in the belt.

United States Patent Application 2021/0040793 describes a magnetic operator positioned within a hollow blind. It includes a back plate with a V-shaped flat spring positioned to bias the operator against the side rail to hold it in place.

United States Patent Application 2020/0190902 contemplates a roller shade for non-rectangular windows. Here, a pair of tension modules are positioned on opposing edges of the roller shade, with constant force springs and pulleys configured to exert tension along the opposing edges of a hem bar that travels on wheels positioned within longitudinal tracks.

United States Patents 10,895,107 and 10,907,406 provide examples of retractable roller shades relying upon coiled springs positioned within the top rail to provide counterbalancing force as the shade is deployed.

For the sake of clarity and to further highlight and contrast with certain aspects of the invention disclosed herein, all of the aforementioned disclosures are incorporated by reference into this Background section.

In view of the foregoing, a sealed or hollow blind assembly with a self-tensioning mechanism would be welcome. Such a system should be robust, resistant to changes in temperature, and capable of withstanding vibrations and other sudden impacts as might be encountered when the assembly is shipped.

### SUMMARY OF INVENTION

One or more constant force springs, having a coil and tab, are provided as part of a tensioning mechanism for sealed, hollow blind driving assembly. The assembly includes a belt attached to an operator to define a belt loop. The belt loop wraps around top and bottom gears, with the top gear being associated with a rotatably drive assembly that can raise or lower sun-blocking elements commonly found in blind assemblies. The entirety of the tensioning mechanism, belt loop, and gears are sized and configured to be sealed within an insulating set of glass panes (and/or the frame required by such double-paned structures). Cooperating magnetic elements associated with the operator then allow for movement of the belt, as well as corresponding movement of the driver.

Specific reference is made to the appended claims, drawings, and description, all of which disclose elements of the invention. While specific embodiments are identified, it will be understood that elements from one described aspect may be combined with those from a separately identified aspect. In the same manner, a person of ordinary skill will have the requisite understanding of common processes, components, and methods, and this description is intended to encompass and disclose such common aspects even if they are not expressly identified herein.

### DESCRIPTION OF THE DRAWINGS

Operation of the invention may be better understood by reference to the detailed description taken in connection with the following illustrations. These appended drawings form part of this specification, and any information on/in the drawings is both literally encompassed (i.e., the actual stated values) and relatively encompassed (e.g., ratios for respective dimensions of parts). In the same manner, the relative positioning and relationship of the components as shown in these drawings, as well as their function, shape, dimensions, and appearance, may all further inform certain aspects of the invention as if fully rewritten herein. Unless otherwise stated, all dimensions in the drawings are with reference to inches, and any printed information on/in the drawings form part of this written disclosure.

In the drawings and attachments, all of which are incorporated as part of this disclosure:
Figure 1 is a perspective view of the blind assembly according to certain aspects of the invention.
Figure 2 is a sectional, perspective view of the tensioning mechanism as attached to the operator and belt, as shown in callout 2 of Fig. 1.
Figure 3 is a sectional, perspective view of the top rail as shown in callout 3 of Fig. 1.
Figure 4A is a centrally longitudinal, cross-sectional, perspective view of the tensioning mechanism of Fig. 2. Figure 4B a centrally lateral, cross-sectional, perspective view of the isolated upper and lower housings and biasing member shown in Fig. 4A. Figure 4C is a transverse cross sectional view of the isolated upper housing and portions of the biasing member, taken along the plane defined by lines 4C-4C in Fig. 5.
Fig. 5 is an isolated perspective view of the tensioning mechanism of Fig. 2.
Figure 6A is a sectional perspective view and Figure 6B a complimentary centrally longitudinal, cross sectional perspective view, both of the inner operator element associated with the tensioning mechanism. Figure 6C is a side elevational view of the elements depicted in Figure 6A.

### DETAILED DESCRIPTION OF EMBODIMENTS

As used herein, the words "example" and "exemplary" mean an instance, or illustration. The words "example" or "exemplary" do not indicate a key or preferred aspect or embodiment. The word "or" is intended to be inclusive rather an exclusive, unless context suggests otherwise. As an example, the phrase "A employs B or C," includes any inclusive permutation (e.g., A employs B; A employs C; or A employs both B and C). As another matter, the articles "a" and "an" are generally intended to mean "one or more" unless context suggest otherwise.

As a preliminary note, the constant force springs used in the tensioning mechanisms contemplated herein are significantly different from standard, helically wound springs (extension or compression coils, torsion springs, etc.). Structurally, constant force springs are made from pre-tensioned, flat strips (usually metal) formed into a circular coil (with a tab or member extending tangentially away from the main coil). Functionally, this allows force to be exerted on the tab that is proportional to the diameter of the coil, with the force required to extend that tab being roughly constant after an initial threshold is overcome.

In contrast, wound springs are usually made from elastically deformable wires or rods, formed into coils or structures that deform in direct proportion to the deformation. Thus, while coiled springs have found significant uses and utility, even within the realm of sun-blocking shades, their sensitivity to deforming in response to a load present challenges for the tensioning mechanism identified in the Background above.

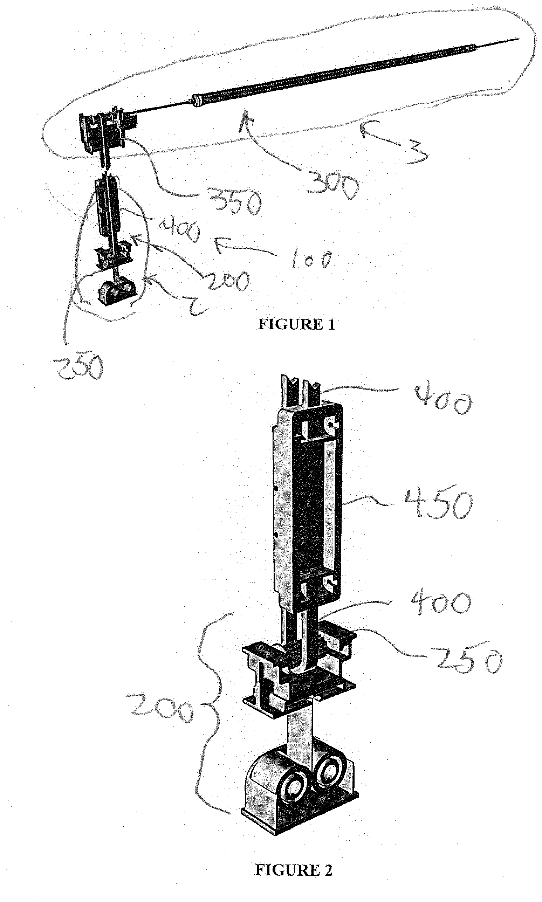

Figure 1 illustrates the arrangement of components for a sealed or hollow blind assembly 100 according to certain aspects of the invention. Assembly 100 includes tensioning mechanism 200; a top rail assembly 300; bottom and top belt gears 250, 350; and a belt 400 and operator assembly 450. Some or all of the elements in assembly 100 are sealed within housing elements, such as glass panels, interconnected cylindrical assemblies, and the like. An operator 450 engages the belt 400, and it may be manipulated by magnetic drivers (positioned outside the housing elements) so as to move the belt 400 and engage the gears 250, 350 and top rail mechanisms 300 accordingly.

Notably, use of a single belt 400 allows for a more compact blind assembly 100. For example, assembly 100 can be advantageously incorporated as sidings or frames that surround the sun-blocking elements (not shown) that are raveled around or expanded/compressed by the top rail assembly 300. United States Patent 9,540,869 (incorporated by reference herein) provides a detailed description of the cord winding mechanism that can be used to drive the movements associated with the sun-blocking elements.

Generally speaking, top rail 300 includes a driver mechanism with top gear assembly 350. Belt 400 loops around and engages teeth on a circular drum 350 that is held within a base stand 310 disposed at an laterally opposed position to end cap 340. Stand 310 may have a U- or C-shape so as to cradle and allow rotary movement in the assembly 350, which drives the rotation of propellers 320 in concert with shaft 330. Thus, movement of the belt 400 also causes rotation of propellers 320 and/or shaft 330, thereby raising or lowering sun blocking elements (not shown) associated therewith. Sun-blocking elements may be of any known variety, such as roller shades, slats held within a corded ladder assembly, pleated and/or accordion-style collapsible members, and the like, and the incorporated references provide additional details in this regard.

When attempting to seal sun-blocking elements within an insulating, hermetically sealed package (e.g., window panes attached to a polygonal frame), providing sufficient tension within the belt 400 and operator 450 can be challenging. As noted above, previous solutions contemplated physically capturing or interacting with features provided on the stationary surfaces of the side rail, although this could lead to the operator "sticking" or otherwise not moving smoothly (in the perceptions of the user). To the extent the operator may move in response to magnets, this perceived sticking can cause the magnet to disengage, thereby at least temporarily frustrating the users efforts to operate the blind assembly.

Other issues can be caused by heating and cooling. In particular, previous tensioning methods can easily fail when exposed to significant temperature changes and gradients, as might be expected in installations exposed to direct sunlight and/or outdoor temperatures. In such cases, materials undergo thermal expansion/contraction, which can result in slackening or over-tightening of the belt so as to make the system unworkable. The coiled constant force springs of the present invention automatically adjust and maintain constant tension throughout the range of operating temperatures, thereby avoiding such issues.

Similarly, blind assemblies must often be shipped significant distances away from their place of manufacture. Sustained and/or sudden vibrational shocks (as are usually experienced in most modes of travel) can cause slackening within the belt loop leading to gears on opposing sides of the belt interlocking. Here again, the coiled constant force springs of this invention compensate and prevent/remove slack from the system by adjusting to maintain tension in real time.

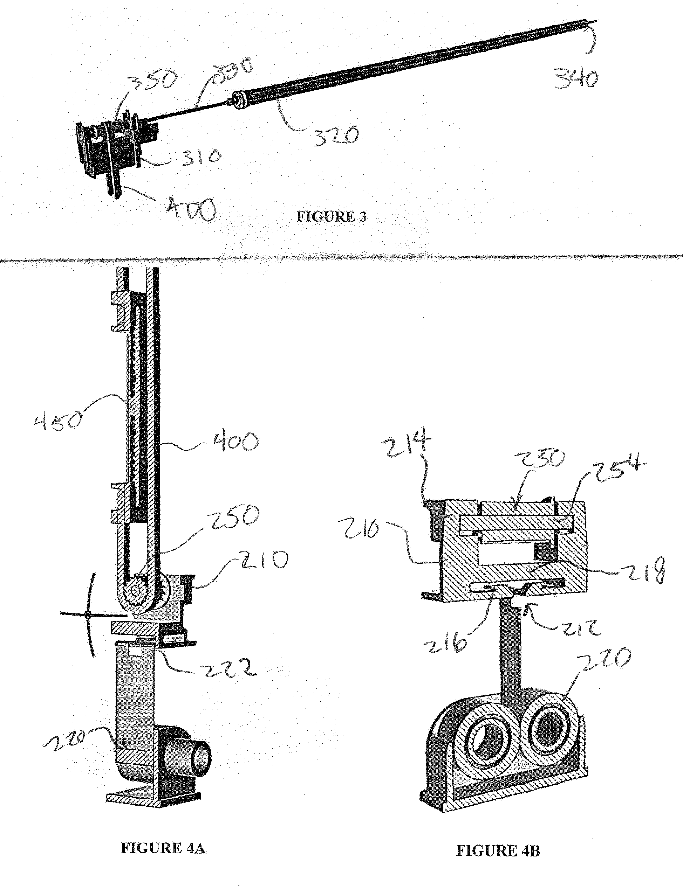

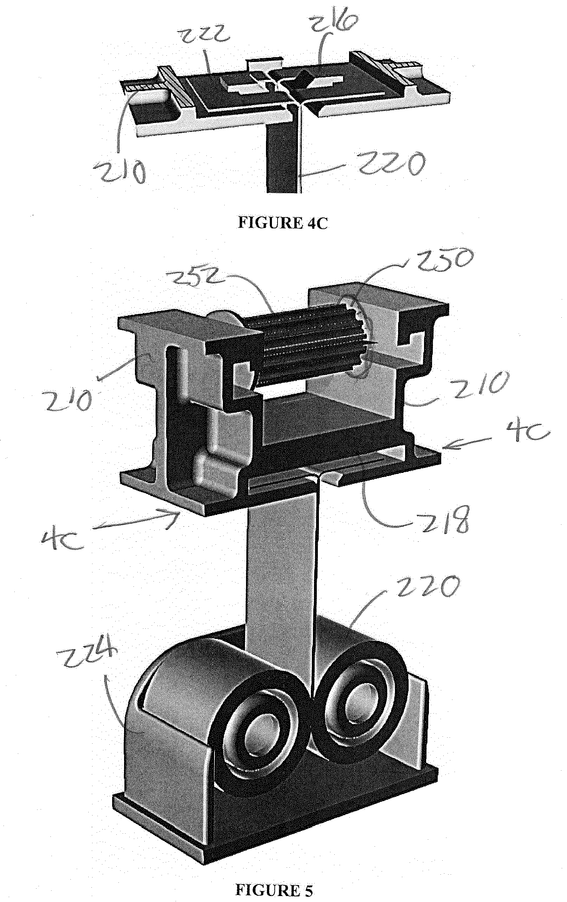

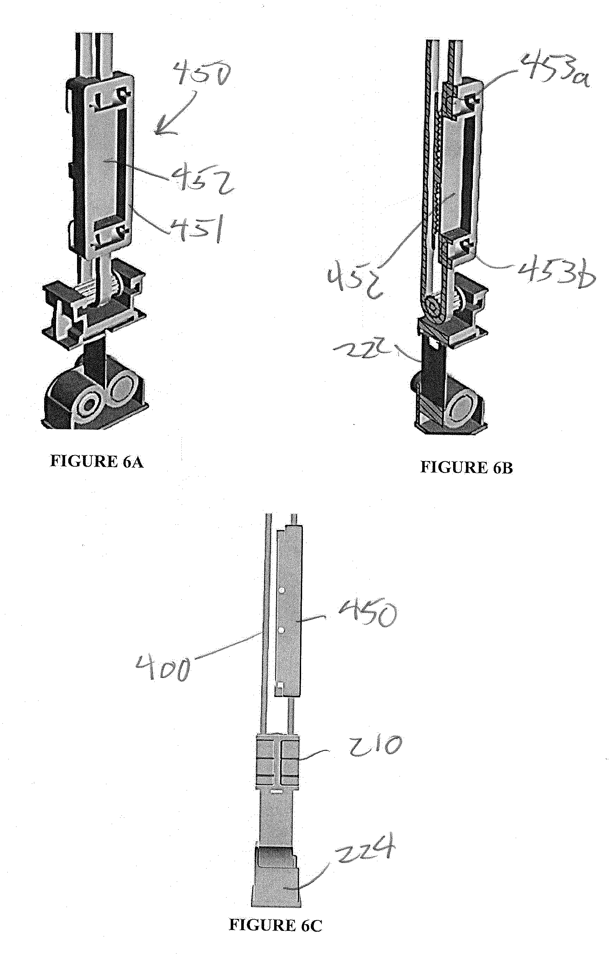

In order to correct these deficiencies, the inventors propose using the tensioning mechanism 200, shown in Figs. 2 and 4A through 6C. In operation, mechanism 200 exerts sufficient, constant force to keep the lower gear 250 properly positioned, so that the belt 400 remains sufficiently tensioned to engage bottom and top gears 250, 350 and induce the desired movement/positioning of any sun-blocking elements in assembly 100.

Tensioning mechanism 200 is of a size and shape that it may be confined within the side rail defined by belt 400. A hollow tube or series of flat members are positioned around both mechanism 200 and belt 400. In turn, this tube/flat members may attach to corresponding structure formed around top rail 300. These elements may also form the sides of a frame, to which opposing panes of glass (or similar members) are attached. In this manner, assembly 100 can be integrated into a window or broader structural assembly including sun-blocking elements and multiple layers (e.g., double-paned glass) insulation.

Bottom gear assembly 250 may be of similar construction to top gear 350. In particular, teeth or engagement gears 252 are positioned around a rotatable cylinder 254 that is rotatably held in base structure 210, such as in a U- or C-shaped cradle assembly 214. Constant force biasing member 220 exerts sufficient force to hold the structure 210 in a stationary position and constant elevation (compared to the axis of the side rail). Thus, the biasing member 220 must be selected to provide sufficient tension to allow the movement of the belt 400 about the gears 250, 350. The precise amount of tension will depend upon the rotational force required to activate propellers 320, as well as the frictional forces to move the belt 400 around the gears 250, 350.

Structure 210 may have a generally square or rectangular shape. Along the bottom, a port 212 receives the tab(s) 222 of biasing member 220. A transverse support member 218 imparts an H-shape to the central cross-sectional shape of body 210, while cleats or posts 216 provide a means of attaching to the terminal end(s) of tab 222.

In one embodiment, a pair of opposing, identically constructed biasing members 220 are provided. In this manner, counterbalancing force can be exerted on opposing sides/ends of the structure 210, thereby simplifying assembly and function of the mechanism 200.

Members 220 are constant force springs, in which flat metal plates are tensioned into coils with an end tab. The tab extends out of the coil at a tangent so that pulling force on the tab is met with constant force (at least after a threshold force has been overcome, as indicated above). The materials of the members can be selected for durability, weight, and/or cost, with common steels, alloys, and other metals being preferred.

Apertures proximate to the end of the tab 222 facilitate connection with/over the cleats 216. The tabs 222 may be bent to fit within the port 212. In this manner, the biasing member(s) 220 can be quickly and easily affixed to the structure 210, prior to or after the belt loop is connected/established.

The members 220 are anchored to a holding cradle 224. Cradle 224 is attached to the side rail (along its bottom and/or side walls). By affixing the cradle 224 to the housing, tension is established in the connections defined by the belt 400, gears 250, 350, and structure 210, as well as the operator 450 that is necessarily encloses the belted loop.

The side rail and top rail housings may be elongated, hollow cylinders or tubes. The cylinder or tube may be multi-sides (e.g., four sides with a square or rectangular cross section), circular, oval, or curvilinear in shape. Owing to its connection to glass panes and the basics of construction, square or rectangular cylinders are preferred. It will also be be understood this structure must be hollow and sized to receive the aforementioned components of assembly 100.

While the gears 250, 350 are described as having teeth 252, 352 provided around the circumference of a barrel or cylinder 254, 354, other constructions are possible. By way of non-limiting example, the cylinder 254, 354 may include spring loaded pins to snap the cylinders into attachment with their respective cradles 210, 310. Alternatively, capture plates or other structures may be attached over the ends of the cylinders 254, 354 after they have been put into place.

Owing to the smooth and easy movements afforded by tensioning mechanism 200, assembly 100 is particularly amenable to magnetic drivers. As such, one or more cavities 452 can be provided within the body structure 451. Magnets and/or cooperating ferromagnetic metal or other appropriate materials are carried within cavity 452. In this manner, a corresponding driver wand (not shown) can be positioned proximate to the structure 451 and, owing to interactions between the magnets and metals/materials, to move in concert therewith. Front and/or back covers can be affixed to the facings of structure 451 for any desired aesthetic.

Anchoring ports 453a, 453b are provided at opposing ends of the structure 451. Ports 453a, 453b include slots or receptacles sized to accept opposing ends of the belt 400. Screws, adhesive, or other fastening mechanisms hold the ends of the belt 400 to the operator 450, thereby forming a driving loop that cooperates with the gears 250, 350 as described above. Notably, this construction allows the belt 400 to be threaded through the gears 250, 350 before creating the closed driving loop.

Operator 450 is preferably configured so that the cavity 452 aligns with the lateral axis of the assembly (i.e., within the same orientation/plane as the axis of shaft 330). However, the tensioning mechanism 200 can be reoriented (e.g., rotated at a 90° angle) and does not necessarily need to connect to the housing 240 exactly as is shown in the drawings.

The foregoing arrangement allows for the elements between the housing 224 and base unit 310 to be held in tension. In this manner, the gear 250 (and its corresponding structure 210) "float" freely, even while the operator 450 may be moved up or down in response to magnetic or other driving forces.

Also, while certain references above are made to a belt, it will be understood that the inventive systems are not necessarily limited only to conventional belts. Instead, any cord, rope, or chain-liked apparatus could be used in place of the depicted thin, flat membered loop. Similarly, any of these belt mechanisms can be manufactured in a manner where ends of a single member are fastened or coupled together to form a loop of adjustable size (e.g., by fitting a pin into a specific aperture formed in the thin, flat member or by adding or removing modular chain links to the loop).

In view of the foregoing, aspects of the tensioning mechanism expressly contemplated herein include any combination of the following elements:
- a floating body having a gear engaging to a driver belt and a port;
- a constant force spring comprising a circular coiled member with a tab protruding tangentially out of the coiled member and attached to the port;
- an immovable anchoring body holding the coiled member;
- wherein the floating body is held in a tension force exerted by the constant force spring and the tension force is selected to allow the driver belt to rotate as part of a loop;
- wherein two substantially identical constant force springs are provided and held within the anchoring body;
- wherein the two substantially identical constant force springs are positioned in a mirrored relationship;
- wherein the floating body has a cross-sectional H-shape with the gear held within a first open end and the tab held within a second open end;
- wherein the driver belt includes an integral operator element; and
- wherein the integral operator element includes a magnetized element.

In a further embodiment, aspects of the tensioning mechanism expressly contemplated herein include any combination of the following elements:
- a driver mechanism connected to an optional sun-blocking element;
- a tensioning mechanism positioned along an axis opposite the driver mechanism;
- a belt loop including an operator element and engaging the driver mechanism and the tensioning mechanism, wherein movement of the operator along the axis creates rotational force capable of extending or retracting the optional sun-blocking element;
- wherein the tensioning mechanism includes a floating body having a gear that engages the belt loop and the floating body held in tension by one or more constant force springs immovably held by an anchoring body;
- wherein the blind assembly is hermetically sealed within a double-paned frame;
- wherein the anchoring body is attached to a lower portion of the double-paned frame;
- wherein the operator is sealed within the double-paned frame and the operator moves along the axis in response to magnetic force;
- wherein each of the constant force spring or springs is formed as thin, flat coiled member, held in the anchoring body, having a tab protruding tangentially away from a main coiled portion and wherein the tab is connected to the floating body;
- wherein the floating body includes a top portion including a cradle retaining the gear and in which a folded end of the tab is received in a port and coupled to a post, with the port and the post formed in a lower portion of the floating body;
- wherein a pair of identical constant force springs are configured in mirroring positions within the anchoring body;
- wherein at least the tensioning mechanism and the belt loop are sealed within a side rail with anchoring body immovably attached to a lower portion of the side rail; and
- wherein the side rail is coupled to a hermetically sealed assembly containing the driver mechanism and the optional sun blocking element.

References to coupling, connection, or attachment in this disclosure are to be understood as encompassing any of the conventional means used in this field. This may take the form of snap- or force fitting of components having tabs, grooves, and the like. Nevertheless, threaded connections, annular or partial bead-and-groove arrangements, cooperating cam members, and slot-and-flange assemblies could be employed. Adhesive and fasteners could also be used, although such components must be judiciously selected so as to retain the recyclable nature of the assembly.

In the same manner, engagement may involve coupling or an abutting relationship. These terms, as well as any implicit or explicit reference to coupling, will should be considered in the context in which it is used, and any perceived ambiguity can potentially be resolved by referring to the drawings.

All components should be made of materials having sufficient flexibility and structural integrity, as well as a chemically inert nature. The materials should also be selected for workability, cost, and weight.

Although the present embodiments have been illustrated in the accompanying drawings and described in the foregoing detailed description, it is to be understood that the invention is not to be limited to just the embodiments disclosed, and numerous rearrangements, modifications and substitutions are also contemplated. The exemplary embodiment has been described with reference to the preferred embodiments, but further modifications and alterations encompass the preceding detailed description. These modifications and alterations also fall within the scope of the appended claims or the equivalents thereof.

## Claims

1. An automatic tensioning system for blind assemblies, the system comprising:
a floating body having a gear engaging to a driver belt and a port;
a constant force spring comprising a circular coiled member with a tab protruding tangentially out of the coiled member and attached to the port; and
an immovable anchoring body holding the coiled member; and
wherein the floating body is held in a tension force exerted by the constant force spring and the tension force is selected to allow the driver belt to rotate as part of a loop.

2. The tensioning system of claim 1 wherein two substantially identical constant force springs are provided and held within the anchoring body.

3. The tensioning system of claim 2 wherein the two substantially identical constant force springs are positioned in a mirrored relationship.

4. The tensioning system of any of the preceding claims wherein the floating body has a cross-sectional H-shape with the gear held within a first open end and the tab held within a second open end.

5. The tensioning system of any of the preceding claims wherein the driver belt includes an integral operator element.

6. The tensioning system of claim 5 wherein the integral operator element includes a magnetized element.

7. A blind assembly comprising:
a driver mechanism connected to an optional sun-blocking element;
a tensioning mechanism positioned along an axis opposite the driver mechanism;
a belt loop including an operator element and engaging the driver mechanism and the tensioning mechanism, wherein movement of the operator along the axis creates rotational force capable of extending or retracting the optional sun-blocking element; and
wherein the tensioning mechanism includes a floating body having a gear that engages the belt loop and the floating body held in tension by one or more constant force springs immovably held by an anchoring body.

8. The assembly of claim 7 wherein the blind assembly is hermetically sealed within a double-paned frame.

9. The assembly of claim 8 wherein the anchoring body is attached to a lower portion of the double-paned frame.

10. The assembly of claim 8 or 9 wherein the operator is sealed within the double-paned frame and the operator moves along the axis in response to magnetic force.

11. The assembly of any of claims 7 to 10 wherein each of the constant force spring or springs is formed as thin, flat coiled member, held in the anchoring body, having a tab protruding tangentially away from a main coiled portion and wherein the tab is connected to the floating body.

12. The assembly of claim 11 wherein the floating body includes a top portion including a cradle retaining the gear and in which a folded end of the tab is received in a port and coupled to a post, with the port and the post formed in a lower portion of the floating body.

13. The assembly of claim 11 or 12 wherein a pair of identical constant force springs are configured in mirroring positions within the anchoring body.

14. The assembly of any of claims 7 to 13 wherein at least the tensioning mechanism and the belt loop are sealed within a side rail with anchoring body immovably attached to a lower portion of the side rail.

15. The assembly of claim 14 wherein the side rail is coupled to a hermetically sealed assembly containing the driver mechanism and the optional sun blocking element.
